# EUROPEAN PATENT SPECIFICATION

(11) **EP 3 127 081 B1**
(45) Date of publication and mention of the grant of the patent: **03.06.2020**
(21) Application number: 15774125.7
(22) Date of filing: 02.04.2015
(51) Int. Cl.: G06F 16/9538

(54) **METHOD AND SYSTEM FOR CONTENT SEARCHING**
VERFAHREN UND SYSTEM ZUR INHALTSDURCHSUCHE
PROCÉDÉ ET SYSTÈME DE RECHERCHE DE CONTENU

(30) Priority: 02.04.2014 IN 964DE2014; 25.03.2015 KR 20150041750
(43) Date of publication of application: 08.02.2017
(73) Proprietor: Samsung Electronics Co., Ltd., Gyeonggi-do 16677 (KR)
(72) Inventor: KUMAR, Sumit, Noida Uttar Pradesh 201303 (IN); NIMJE, Snehil, Uttar Pradesh 201303 (IN)
(74) Representative: HGF Limited
(86) International application number: PCT/KR2015/003282
(87) International publication number: WO 2015/152647

(56) References cited:
- JP-A- 2007 047 974
- KR-A- 20080 047 094
- US-A1- 2006 080 292
- US-A1- 2006 277 167
- US-A1- 2009 287 658
- US-A1- 2010 333 000
- US-A1- 2010 333 000
- US-B1- 6 460 060
- Abhishek Bhatnagar: "Best Google Chrome Extensions To Search Text Across Opened Tabs Webpages", TroubleFixers.com, 4 May 2012 (2012-05-04), pages 1-3, XP055390080, Retrieved from the Internet: URL:http://www.troublefixers.com/best-goog le-chrome-extensions-to-search-text-across -opened-tabs-webpages/ [retrieved on 2017-07-12]
- Anonymous: "Firefox ALL OPEN WINDOWS & Tabs FIND Function Or Extension?", mozillaZine Forums, 18 July 2011 (2011-07-18), pages 1-4, XP055390264, Retrieved from the Internet: URL:http://forums.mozillazine.org/viewtopi c.php?t=1118155 [retrieved on 2017-07-12]
- Hiroyuki Sano: "Search Plus ScreenCast", youtube, 12 April 2012 (2012-04-12), page 1 pp., XP054977543, Retrieved from the Internet: URL:https://www.youtube.com/watch?v=HdDoRi 4C7RU [retrieved on 2017-07-11]
- Anonymous: "The Chromium Projects - History", chromium.org, 13 October 2013 (2013-10-13), pages 1-2, XP55526489, Retrieved from the Internet: URL:https://web.archive.org/web/2013101304 1214/https://www.chromium.org/user-experie nce/history [retrieved on 2018-11-23]

## Description

### Technical Field

Systems and methods consistent with exemplary embodiments relate to computer based content searching systems and in particular relates to web-content search systems.

### Background Art

The following background discussion includes information that may be useful in understanding the present invention. It is not an admission that any of the information provided herein is prior art or relevant to the presently claimed invention, or that any publication specifically or implicitly referenced is prior art.

Use of multiple tabs within a single browser window for viewing/surfing of multiple websites has become a commonly adopted approach. Various browser applications such as Mozilla, Safari, Google Chrome are well known to support such multiple tab functionality, thereby leading to rendering of multiple web pages within same browser window. However, rendering of multiple tabs within the same browser window often makes it difficult to keep track of the contents of each of said multiple websites. Especially in a scenario where the user has opened large number of tabs, detecting a relevant tab or tabs depicting therein the corresponding websites containing a particular search term is not feasible.

Under the current scenario, the user is forced to individually visit each rendered tab and run a "Cntrl+F" based keyword search within every tab to detect the desired tab. However, the individual visit to every tab to execute the "Cntrl+F" based search functionality is enormously time consuming and tiring. Many a times, the actual relevant tabs are missed out from the sight of the user owing to the prevailing confusion.

Also, one can envisage a scenario wherein the search keyword might be present in a website visited in the past, but not currently being rendered on any of the actively rendered tabs of the single window browser.

Accordingly, there is an imminent need to perform a tab management operation to an extent that the relevant tabs out of all the active tabs in the browser window are easily identifiable by the user without individually accessing every tab and conducting an individual search for each tab.

As an add-on functionality, it may be desirous to include web pages from the history section while performing a single search operation thereby, making the process of searching more user friendly, less time consuming and/ or less prone to errors (possible to arise due to confusion).

"Best Google Chrome Extensions To Search Text Across Opened Webpages", TroubleFixers.com 4 May 2012, pages 1-3, XP055390080 relates to google chrome extensions for allowing search of text across opened webpages.

US 2010/0333000 (A1) relates to a search tool for enabling users to search for synonyms of, and/or syntactically similar words to search terms that they enter. In at least some embodiments presented in US 2010/0333000 (A1), the search tool is implemented in the context of a web browser for searching web pages. In some embodiments presented in US 2010/0333000 (A1), search terms can be distinctly, visually highlighted on a page, such as a web page, to allow the user to easily identify words that have been found through the search. In at least some embodiments presented in US 2010/0333000 (A1), color coding can be used to uniquely identify exact matches, synonyms and/or syntactically similar words that are identified on a page.

"The Chromium Projects - History" retrieved from www.chromium.org/user-experience/histoy relates to Chromium's history system.

US 6460 060 B1 relates to a Web browser having search capabilities, which automatically generates a search list from URLs in the browser's bookmark and/or history files and automatically accesses and searches each URL on the Internet or cache on the browser's computer. Each bookmark or each web page generated for the list, when accessed, may be searched for selected keywords. URL search parameters are entered into the search function, a list of URLs is automatically created from the bookmark file and/or the history file. A new browser is opened and the new browser, in background, accesses the Web or cache, connects when prompted, with each web page listed. Each web page is then searched for keywords provided by a user. Web pages containing the target keywords are then displayed in a format selected by the user on the data processing system display. Individual web pages may be accessed and displayed in successive order by utilizing the graphical "next/previous" buttons present in the web browser window.

### Disclosure of Invention

### Technical Problem

### Solution to Problem

Accordingly, a method, respectively a system of content searching in a browser window as defined by the appended independent claims are provided.

Further optional aspects of the invention are to be found in the attached dependent claims.

### Advantageous Effects of Invention

### Brief Description of Drawings

These and/or other aspects will become apparent and more readily appreciated from the following description of the exemplary embodiments, taken in conjunction with the accompanying drawings in which:
Figure 1 illustrates a flow chart showing a method for searching content across a plurality of web-browser tabs, in accordance with an exemplary embodiment;
Figure 2 illustrates a flow chart showing a method for searching content across a plurality of web-browser tabs, in accordance with an exemplary embodiment; and
Figure 3 illustrates a schematic diagram of a content-searching system for searching content across a plurality of web-browser tabs, according to an exemplary embodiment;
Figure 4 illustrates a typical hardware configuration of a computer system implementing the system of Fig. 3, thereby representing a hardware environment for content searching according to an exemplary embodiment;
Fig. 5 illustrates an implementation of showcasing the results of the content search, according to an exemplary embodiment;
Fig. 6 illustrates another implementation of showcasing the results of the content search. according to an exemplary embodiment;.
Fig. 7 illustrates another implementation of showcasing the results of the content search, according to an exemplary embodiment;
Fig. 8 illustrates another implementation of showcasing the results of the content search, according to an exemplary embodiment;
Fig. 9 illustrates another implementation of showcasing the results of the content search, according to an exemplary embodiment;
Fig. 10 illustrates another implementation of showcasing the results of the content search.

Furthermore, skilled artisans will appreciate that elements in the drawings are illustrated for simplicity and may not have been necessarily been drawn to scale. For example, the flow charts illustrate the method in terms of the most prominent steps involved to help to improve understanding of aspects of the content search. Furthermore, in terms of the construction of the device, one or more components of the device may have been represented in the drawings by conventional symbols, and the drawings may show only those specific details that are pertinent to understanding the exemplary embodiments so as not to obscure the drawings with details that will be readily apparent to those of ordinary skill in the art having benefit of the description herein.

### Best Mode for Carrying out the Invention

-

### Mode for the Invention

For the purpose of promoting an understanding of the principles of the content search described herein, reference will now be made to the embodiment illustrated in the drawings and specific language will be used to describe the same. It will nevertheless be understood that no limitation of the scope is thereby intended, such alterations and further modifications in the illustrated system, and such further applications as illustrated therein being contemplated as would normally occur to one skilled in the art to which the content search relates.

It will be understood by those skilled in the art that the foregoing general description and the following detailed description are exemplary and explanatory and are not intended to be restrictive thereof. Throughout the patent specification, a convention employed is that in the appended drawings, like numerals denote like components.

Reference throughout this specification to "an embodiment", "another embodiment" or similar language means that a particular feature, structure, or characteristic described in connection with the embodiment is included in at least one embodiment. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures proceeded by "comprises... a" does not, without more constraints, preclude the existence of other devices or other sub-systems or other elements or other structures or additional devices or additional sub-systems or additional elements or additional structures.

Unless otherwise defined, all technical and scientific terms used herein have the same meaning as commonly understood by one of ordinary skill in the art. The system, methods, and examples provided herein are illustrative only and not intended to be limiting.

Embodiments will be described below in detail with reference to the accompanying drawings.

A system and method for facilitating a keyword search across different web-pages that are simultaneously opened in a web-browser window is disclosed. In accordance with the embodiments, the keyword search may also be performed in the historically browsed but currently inactive web-pages.

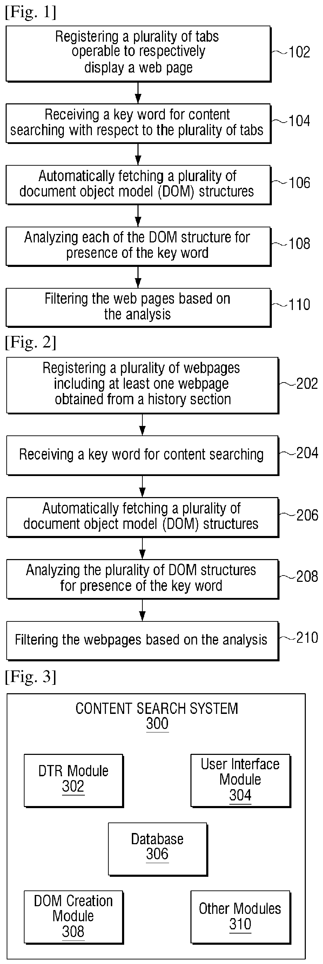

Figure 1 illustrates a flowchart showing a method for content searching, according to a first embodiment of the invention.

The method starts in step 102, with registration of a number of tabs, each containing a currently opened web-page. The registration includes associating the tabs as well the web page rendered therein with a user interface (UI) module of a corresponding web browser. The UI (User interface) module located within the web browser application keeps a record of number of tabs opened by the user as well the currently active websites associated with such tabs (if any). Even after a tab is opened by the user, it may be inadvertently left blank or it may have been unable to reach a website owing to active/inactive status of the website hosting server. Accordingly, the UI module keeps updating its record with the varying association of tabs with new websites or web-pages. In other words, every opened tab and its corresponding details are registered with the UI module of the browser.

In the next method step 104, a keyword is received from a user for content searching in the plurality of tabs. There can be multiple manners of receiving the keyword from the user and some examples of the same will be discussed in detail in some of the following paragraphs in association with the relevant figures. In addition to the receipt of the keyword, various other input/directions may be received like performing the search of keyword from bottom to top, top to bottom, left half, right half etc. of the web-pages. Additionally, the step of receiving the keyword may be performed prior to the step of registration.

In the next method step 106, a number of document object model (DOM) structures are automatically fetched for each of the currently opened tabs. As known in the art, each web page has a corresponding document object model (DOM) structure associated thereto. The DOM structures are in the form of a tree like structure having an arrangement of nodes, with topmost node named "Document object". Such DOM structure is an outcome of the processing of Mark-up language (HTML, XML, etc) by a DOM application. As known in the art, the DOM application is a language independent platform for representing and interacting with objects in mark up languages (HTML, XHTML and XML) format. The DOM structure assists the browser in rendering the corresponding web pages as well as for performing various user interactive activities like content search within the web-page.

In the next method step 108, each of the fetched DOM structures is analyzed for presence of the keyword as entered by the user. For such purpose, a "text.node" of the corresponding DOM structure is accessed to look for the keyword. Any known search method can be employed for such purposes. In one option, the accessed DOM structures may be analyzed in a sequential manner.

In the next method step 110, the DOM structures having at least a single occurrence of the keyword are filtered from all of the accessed DOM structures thereby enabling filtering of the tab(s) having at least a single occurrence of the keyword. Thus it can be said that post filtering, tabs that are relevant (relevant tabs) are separated from the remaining tabs. In the implementations, the relevant tabs are arranged/depicted in a manner that the same are easily identified or in other words stand distinguished from the remaining tabs and are presented to the user in the single browser. In addition to differentiating the relevant tabs from the remaining tabs, it is also possible to arrange the relevant tabs based on one or more additional criteria, including by way of example, the number of times the keyword appears, location at which the keyword appears, number of times the tabs have been accessed, etc.

Once again, it is possible to adopt different mechanisms for distinguishing and depicting the relevant tabs as compared to the remaining tabs and some examples of the same will be described in the following paragraphs in association with relevant figures.

As stated in the background section, it may be desirous to include web pages from the history section while performing a single search operation thereby, making the process of searching more user friendly, less time consuming and/or less prone to errors (as may be caused due to confusion). A process for enabling the above is illustrated in the flowchart in Figure 2 showing a method for content searching according to a second embodiment.

The method starts in step 202, with registration of a number of web pages. As aforementioned, each web page has a corresponding document object model (DOM) structure associated thereto. In addition, at least one webpage from the plurality of webpages is obtained from a history section. Though not necessary, at the outset, the user may be provided an option to execute search exclusively in the currently opened tabs or historically opened tabs or both. Once the option including 'historical web-page or tab" is chosen, the user may be facilitated to further provide a pre-determined time period or pre-defined number of stored web-pages that can be considered while looking for historical web-pages.

The registration of current opened web pages is similar to the process explained in Fig. 1. In case of the historical web pages, or in other words the web-pages not currently displayed in the tabs, the saved web links are tracked from the database. In case a pre-determined time period or pre-defined number of stored web-pages is provided, the tracking is made according to the same.

In the next method step 204, a keyword is received for content searching in the plurality of web-pages. There can be multiple manners of receiving the keyword from the user and some examples of the same will be discussed in detail in some of the following paragraphs with association with the relevant figures. As aforementioned, various other input/directions may be received like performing the search of keyword from bottom to top, top to bottom, left half, right half etc. of the web-pages. Also, the step of receiving can be performed prior to the step of registration.

In the next method step 206, a number of document object model (DOM) structures for each of the web pages are automatically fetched, both for currently active web pages and historical web pages. As mentioned before,, the DOM structures are in the form a tree like structure, which is a representation of the content of web page in a configurable manner, and rendered by the processing of web-page content by the web browser functionality. Accordingly, each web-page has a pre-defined DOM structure.

In the next method step 208, each of the fetched DOM structure is analyzed for presence of the keyword as entered by the user through the user interface. For such purpose, the "text.node" of the DOM structure is considered to look for the keyword. Any known search method can be employed for such purposes. In one option, the accessed DOM structures may be analyzed in a sequential manner.

In the next method step 210, the DOM structures having at least a single occurrence of the keyword are filtered from all of the accessed DOM structures thereby enabling filtering of the webpage(s) having at least a single occurrence of the keyword. Thus it can be said that post filtering, webpages that are relevant (relevant web pages) are separated from the remaining webpages.

In case a relevant webpage is being depicted currently by a tab, the same is identified as a relevant tab and is depicted in an easily identifiable manner or in other words stand distinguished from the remaining tabs and are presented to user the user in the single browser.

In case a relevant webpage corresponds to a historical webpage, the same may be rendered in a new tab within the single window browser as a relevant tab. However, prior to such rendering, the user may be queried and user's consent may be sought. It may be noted that the consent for the above mentioned purpose (i.e. for rendering a relevant historical webpage in a new tab) may be sought from the user in multiple manners and a non-limiting example of the same will be described in the forthcoming paragraphs with association with the relevant figure. Especially when plurality of historic webpages are determined to be relevant, at the time of seeking consent it is also possible to list the historic webpages based on one or more additional criteria, including by way of example, the number of times the keyword appears, location at which the keyword appears, number of times the webpage has been accessed, etc.

Once again, it is possible to adopt different mechanisms for distinguishing and depicting the relevant tabs as compared to the remaining tabs and some examples of the same will be described in the following paragraphs with association with relevant figures. In a manner similar to what has been described with reference to Figure 1, in addition to the differentiating the relevant tabs from the remaining tabs, it is also possible to arrange the relevant tabs based on one or more additional criteria, including by way of example, the number of times the keyword appears, location at which the keyword appears, number of times the tabs has been accessed, etc.

Furthermore, the keyword searches as performed may also be stored for future usage. Accordingly, in case of the user executing the historical web pages based search, those search results may be extracted from the search result database that correspond to similar keyword as currently provided by the user. In other words, the historical web-pages displayed as search results will include those web-pages that have been searched for the similar keyword in a pre-determined historical time period as inputted by the user.

As shown above, FIGS. 1 and 2 describe that the DOM structures are fetched and analyzed to determine whether a keyword exists, and web pages are filtered based on the analysis. However, an exemplary embodiment is not limited thereto. For example, a plurality of web pages may be analyzed and filtered directly without the DOM structures being fetched and analyzed.

Now, coming to the aspect of implementation, Figure 3 illustrates a system implementation of a method for facilitating keyword search across different tabs that are simultaneously open in a web-browser window, according to an exemplary embodiment. The web-browser may be construed to cover all well-known internet surfing browsers like Google Chrome, Mozilla Firefox, Safari, Internet Explorer etc.

The system 300 incorporates a dynamic tab recognizing (DTR) module 302, a User Interface (UI) module 304, a DOM creation module 308, a database 306 and other miscellaneous modules 310 for achieving the simultaneous search over multiple tabs in a browser window. For such purpose, the modules may be in the form of instructions stored in the memory and executed by a processor. The UI module 304 and the DOM creation module 308 perform the steps 102, 106 and 202, 206, respectively, as recited under the Fig 1 and Fig. 2. Whereas, the DTR module 302 performs the steps 104, 108, 110, 204, 208 and 210 as recited under the Fig. 1 and Fig. 2. Any stored data in form of historical web sites or other may be fetched from the database 306. Likewise, other miscellaneous modules that support the functionality of modules 302, 304, and 306 may be regarded as other modules 310. Generally, the DOM creation module 308 may form part of the web browser. The database 306 can be located anywhere in a computing system. The DTR module 302 can be either a part of the web browser or can be a separate application. The UI module 304 can similarly be part of the web browser or a separate application.

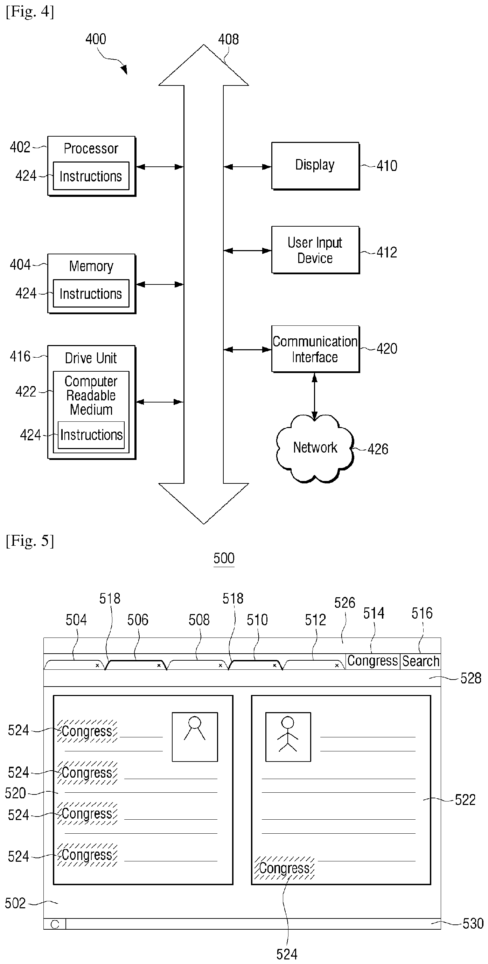

Figure 4 illustrates a typical hardware configuration of the content search system 300 implemented in a computing system 300, which is representative of a hardware environment for conducting the content search described above. Any of the components of the system 300 may include a portion or all of the computer system 400. The computer system 400 can include a set of instructions that can be executed to cause the computer system 300 to perform any one or more of the methods disclosed. The computer system 400 may operate as a standalone device or may be connected, e.g., using a network, to other computer systems or peripheral devices.

In a networked deployment, the computer system 300 may operate in the capacity of a server or as a client subscriber computer in a server-client subscriber network environment, or as a peer computer system in a peer-to-peer (or distributed) network environment. The computer system 400 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a landline telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. Further, while a single computer system 400 is illustrated, the term "system" shall also be taken to include any collection of systems or sub-systems that individually or jointly execute a set, or multiple sets, of instructions to perform one or more computer functions.

The computer system 300 may include a processor 402, e.g., a central processing unit (CPU), a graphics processing unit (GPU), or both. The processor 402 may be a component in a variety of systems. For example, the processor 402 may be part of a standard personal computer or a workstation. The processor 402 may be one or more general processors, digital signal processors, application specific integrated circuits, field programmable gate arrays, servers, networks, digital circuits, analog circuits, combinations thereof, or other now known or later developed devices for analyzing and processing data The processor 402 may implement a software program, such as code generated manually (i.e., programmed).

The term "module" may be defined to include a plurality of executable modules. As described herein, the modules are defined to include software, hardware or some combination thereof executable by a processor, such as processor 402. Software modules may include instructions stored in memory, such as memory 404, or another memory device, that are executable by the processor 402 or other processor. Hardware modules may include various devices, components, circuits, gates, circuit boards, and the like that are executable, directed, or otherwise controlled for performance by the processor 402.

The computer system 400 may include a memory 404, such as a memory 404 that can communicate via a bus 408. The memory 404 may be a main memory, a static memory, or a dynamic memory. The memory 404 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one example, the memory 404 includes a cache or random access memory for the processor 402. In alternative examples, the memory 404 is separate from the processor 402, such as a cache memory of a processor, the system memory, or other memory. The memory 404 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 404 is operable to store instructions executable by the processor 402. The functions, acts or tasks illustrated in the figures or described may be performed by the programmed processor 402 executing the instructions 424 stored in the memory 404. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 400 may or may not further include a display unit 410, such as a liquid crystal display (LCD), an organic light emitting diode (OLED), a flat panel display, a solid state display, a cathode ray tube (CRT), a projector, a printer or other now known or later developed display device for outputting determined information. The display 410 may act as an interface for the user to see the functioning of the processor 402, or specifically as an interface with the software stored in the memory 404 or in the drive unit 416.

Additionally, the computer system 400 may include an input device 412 configured to allow a user to interact with any of the components of system 400. The input device 412 may be a number pad, a keyboard, or a cursor control device, such as a mouse, or a joystick, touch screen display, remote control or any other device operative to interact with the computer system 400.

The computer system 400 may also include a disk or optical drive unit 416. The disk drive unit 416 may include a computer-readable medium 422 in which one or more sets of instructions 424, e.g. software, can be embedded. Further, the instructions 424 may embody one or more of the methods or logic as described. In a particular example, the instructions 424 may reside completely, or at least partially, within the memory 404 or within the processor 402 during execution by the computer system 400. The memory 404 and the processor 402 also may include computer-readable media as discussed above.

The present invention contemplates a computer-readable medium that includes instructions 424 or receives and executes instructions 424 responsive to a propagated signal so that a device connected to a network 426 can communicate voice, video, audio, images or any other data over the network 426. Further, the instructions 424 may be transmitted or received over the network 426 via a communication port or interface 420 or using a bus 408. The communication port or interface 420 may be a part of the processor 402 or may be a separate component. The communication port 420 may be created in software or may be a physical connection in hardware. The communication port 420 may be configured to connect with a network 426, external media, the display 410, or any other components in system 400, or combinations thereof. The connection with the network 426 may be a physical connection, such as a wired Ethernet connection or may be established wirelessly as discussed later. Likewise, the additional connections with other components of the system 400 may be physical connections or may be established wirelessly. The network 426 may alternatively be directly connected to the bus 408.

The network 426 may include wired networks, wireless networks, Ethernet AVB networks, or combinations thereof. The wireless network may be a cellular telephone network, an 802.11, 802.16, 802.20, 802.1Q or WiMax network. Further, the network 426 may be a public network, such as the Internet, a private network, such as an intranet, or combinations thereof, and may utilize a variety of networking protocols now available or later developed including, but not limited to TCP/IP based networking protocols.

While the computer-readable medium is shown to be a single medium, the term "computer-readable medium" may include a single medium or multiple media, such as a centralized or distributed database, and associated caches and servers that store one or more sets of instructions. The term "computer-readable medium" may also include any medium that is capable of storing, encoding or carrying a set of instructions for execution by a processor or that cause a computer system to perform any one or more of the methods or operations disclosed. The "computer-readable medium" may be non-transitory, and may be tangible.

In an example, the computer-readable medium can include a solid-state memory such as a memory card or other package that houses one or more nonvolatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative example, dedicated hardware implementations, such as application specific integrated circuits, programmable logic arrays and other hardware devices, can be constructed to implement various parts of the system 400.

Applications that may include the systems can broadly include a variety of electronic and computer systems. One or more examples described may implement functions using two or more specific interconnected hardware modules or devices with related control and data signals that can be communicated between and through the modules, or as portions of an application-specific integrated circuit. Accordingly, the present system encompasses software, firmware, and hardware implementations.

The system described may be implemented by software programs executable by a computer system. Further, in a non-limited example, implementations can include distributed processing, component/object distributed processing, and parallel processing. Alternatively, virtual computer system processing can be constructed to implement various parts of the system.

The system is not limited to operation with any particular standards and protocols. For example, standards for Internet and other packet switched network transmission (e.g., TCP/IP, UDP/IP, HTML, HTTP) may be used. Such standards are periodically superseded by faster or more efficient equivalents having essentially the same functions. Accordingly, replacement standards and protocols having the same or similar functions as those disclosed are considered equivalents thereof.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

Fig. 5 illustrates an exemplary implementation of showcasing the results of the above described content search, according to an exemplary embodiment. The implementation includes a web browser window 500 containing a web page display region 502, a number of tabs (504, 506, 508, 510, 512) opened by the user and subjected to search by the system 300. The browser window 500 further includes a keyword text box 514 for receiving the searched keyword, and a search button 516 for activating the search. In an example depicted in Fig. 5, the keyword chosen for search and as typed in the text box 514 is "Congress".

After executing the search, a pre-view of number of relevant tabs 520 and 522 is rendered, according to an exemplary embodiment. In the present example, the pre-view showcases the display of the keyword search results (524) located in the web pages 520 and 522. In addition, the pre-view composed of the web-pages 520 and 522 have been depicted in a foreground, ahead of the usual web-page display region 502, according to an exemplary embodiment. It may be noted that the web-pages 520 and 522 correspond to the relevant tabs (506, 510) that have been found as containing the keyword. In addition, the relevant tabs (506, 510) have been accordingly highlighted or darkened. Such relevant tabs (506, 510) have been additionally represented by 518. Further, the web browser window 500 also depicts a URL field 528 for receiving the web-site address from the user and a task bar 530, according to an exemplary embodiment.

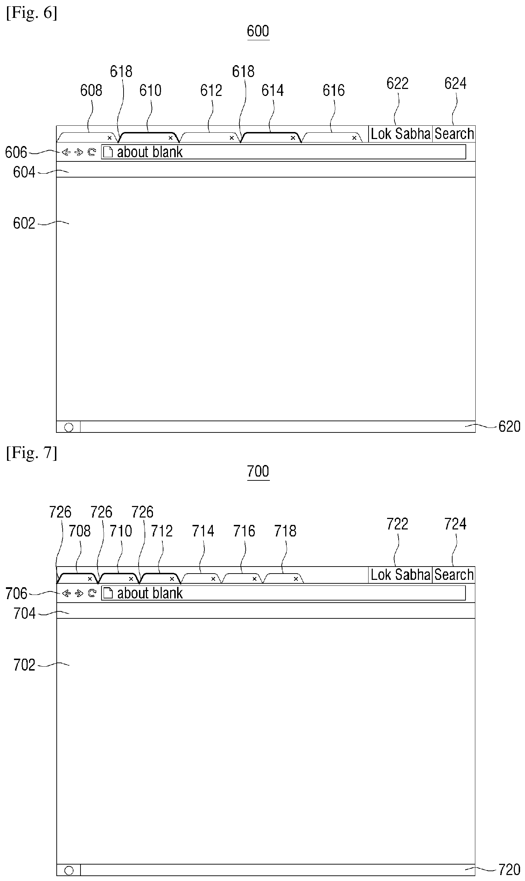

Fig. 6 illustrates another exemplary implementation of showcasing the results of the above described content search, according to an exemplary embodiment. The implementation includes a web browser window 600 having a web page display region 602, a URL address field 606, and another miscellaneous field 604 for displaying other browser window options. The window 600 further includes a number of tabs (608, 610, 612, 614, 616) opened by the user and subjected to search by the system 300. The browser window 600 further includes a keyword text box 622 for receiving the searched keyword and a search button 624 for activating the search. In an example depicted in Fig. 6, the keyword chosen for search and as typed in the text box 622 is "Lok Sabha".

After executing the search, instead of showing the display of the keyword search results, only the relevant tabs (610, 614) that have been found as containing the keyword have been highlighted or darkened, according to an exemplary embodiment. The resultant or relevant tabs (610, 614) have been additionally represented by 618. It may be noted that the web-page display region 602 in such scenario may render the web-page as being currently acted upon by the user and corresponding to any of the number of active tabs (608, 610, 612, 614, 616), while undertaking the keyword search. In the present example, the web-page display region 602 is blank as it corresponds to an opened tab that is yet to be utilized to display a web-site. Further, the web browser window 600 may also depicts a task bar 620.

Fig. 7 illustrates another exemplary implementation of showcasing the results of the above described content search, according to an exemplary embodiment. The implementation includes a web browser window 700, a web page display region 702, a URL address field 706, and another miscellaneous field 704 for displaying other browser window options. Further, the browser window 700 includes a number of tabs (708, 710, 712, 714, 716 and 718) currently opened by the user and subjected to search by the system 300. The browser window 700 also includes a keyword text box 722 for receiving the searched keyword and a search button 724 for activating the search. In an example depicted in Fig. 7, the keyword chosen for search and as typed in the text box 722 is "Lok Sabha".

Here, the display of relevant tabs is similar to Fig. 6. The relevant tabs (708, 710, 712) that have been found as containing the keyword have been accordingly highlighted or darkened, according to an exemplary embodiment. Such relevant tabs have been additionally represented by the numeral 726. However, as compared to Fig. 6, the relevant tabs (708, 710, 712) have been clubbed together and separated from the non-relevant tabs (714, 716 and 718). Like the web-page display region 602 of Fig. 6, the web-page display region 702 also follows the similar pattern of depicting the web-page corresponding to any of relevant or non-relevant tabs and currently acted upon by the user. Further, the web browser window 700 may also depicts a task bar 720.

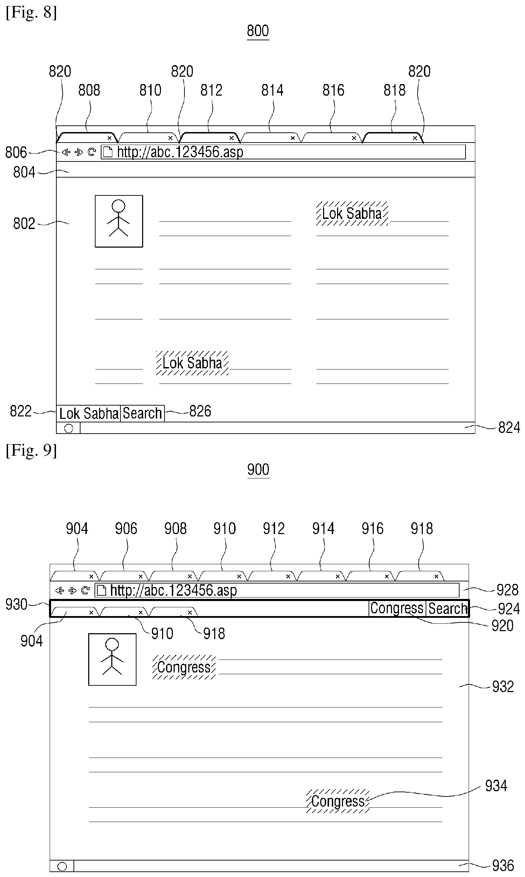

Fig. 8 illustrates another exemplary implementation of showcasing the results of the above described content search, according to an exemplary embodiment. The implementation includes a web browser window 800, a displayed web page 802, a URL address field 806, another miscellaneous field 804 for displaying other browser window options, a number of currently opened tabs (808, 810, 812, 814, 816 and 818) subjected to search by the system 300, a keyword text box 822 to receive the keyword from the user, and a search button 826 to activate the keyword search. In an example depicted in Fig. 8, the keyword chosen for search and typed in the text box 822 is "Lok Sabha".

After executing the search, keyword search results "Lok Sabha" are shown displayed in the displayed web-page 802 that corresponds to any of the relevant tabs (808, 812, 820) that have been found as containing the keyword, according to an exemplary embodiment. Such web-page may be opened by the system 300 automatically based upon the number of results present therein, immediately after the search has been completed by the system 300. Further, the relevant tabs (808, 812, 818) have been accordingly highlighted or darkened, and have been additionally represented by 820. It may be noted that in comparison with preceding figures, the position of the text box 822 and the search button 826 is changed. Further, the web browser window 800 may also depicts a task bar 824.

Fig. 9 illustrates another exemplary implementation of showcasing the results of the above described content search, according to an exemplary embodiment. The implementation includes a web browser window 900, a number of arranged tabs (904, 906, 908, 910, 912, 914, 916 and 918) as searched by the system 300, a keyword text box 920, a search button 924, and a URL address field 928, and a darkened field 930 as explained later. In an example, the keyword chosen for search and as typed in the text box 920 is "Congress".

After executing the search, keyword search results "Congress" (934) is shown displayed in a displayed web-page 932 that corresponds to any of the relevant tabs (904, 910, 918) that have been found as containing the keyword, according to an exemplary embodiment. Such web-page may be opened by the system 300 automatically based upon the number of results present therein, immediately after completion of the search. Instead of highlighting individually, the relevant tabs (904, 910, 918) have been placed in the darkened field 930, oriented below a URL address field 928. Further, the web browser window 900 may also depicts a task bar 936.

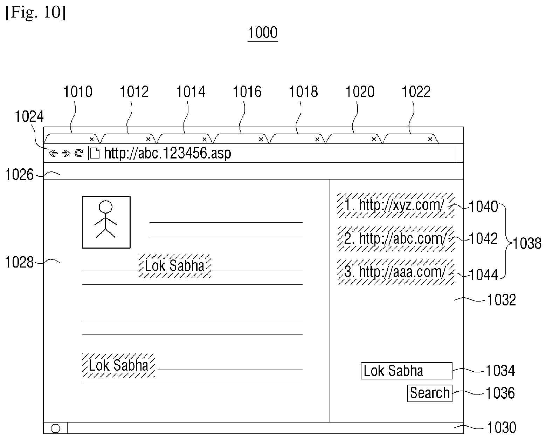

Fig. 10 illustrates another exemplary implementation of showcasing the results of the above described content search. The implementation includes a web browser window 1000 having a number of tabs (1010, 1012, 1014, 1016, 1018, 1020 and 1022) opened by the user and subjected to the search by the system 300, a URL address field 1024, and another miscellaneous field 1026 for displaying other browser window options. A region 1032 is forming a part of the browser window 1000 surrounds a text box 1034, a search button 1036, and a number of hyperlinks (1040, 1042, 1044) collectively referred to as 1038 in Fig. 10. In an example depicted in Fig. 10, the keyword chosen for search and as typed in the text box 1036 is "Lok Sabha."

After executing the search, keyword search results "Lok Sabha" is shown displayed in a displayed web-page 1028, corresponding to any of the relevant tabs (say 1012, 1016, 1018) that have been found as containing the keyword. Now, instead of highlighting individually all of the relevant tabs, corresponding hyperlinks, collectively represented as 1038, have been shown inside the region 1032. Such hyperlinks 1038 correspond to web-pages rendered within the relevant tabs. On clicking a hyperlink 1040, the web page 1028 gets displayed. Likewise, other hyperlinks 1042 and 1044 may be clicked upon to display the corresponding web pages in the section 1028. Accordingly, it may be understood that the region 1032 is generated at run-time. Also, in the present example, the hyperlink 1044 has been extracted as corresponding to a historical web page containing the search result "Congress". Further, the web browser window 1000 may also depict a task bar 1030.

In each of the browser windows as depicted in Fig. 5 to 10, the combination of the keyword text box and the search button acts as a DTR panel or DTR user interface of the described system 300. Further, the web browser window 1000 may also depict a task bar 1030.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the disclosure, any limitations arising on account of the same are not intended. As would be apparent to a person in the art, various working modifications may be made to the method in order to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

## Claims

1. A method of content searching in a web browser window (500,600,700,800), the web browser window including a URL field (528,606,706,806) and one or more tabs corresponding to currently active webpages, wherein the method comprises:
registering a plurality of webpages consisting of the currently active webpages and at least one webpage obtained from a history section comprising historically browsed but currently inactive webpages;
receiving a keyword for content searching;
searching for the keyword in each of the plurality of webpages;
filtering the plurality of webpages based on the search to distinguish webpages containing the keyword from the remaining webpages;
if one or more of the at least one webpage obtained from the history section is filtered as comprising the keyword, rendering each of the filtered one or more of the at least one webpage obtained from the history section in a new respective tab within the web browser window; and
highlighting, in the web browser window, the tabs (518,618,726,820) corresponding to the filtered webpages comprising the keyword.

2. The method as claimed in claim 1, further comprising:
seeking permission from the user to open at least one filtered previously visited webpage in a new tab.

3. The method as claimed in claim 1, wherein each of the plurality of webpages have a corresponding document object model (DOM) structure, wherein the searching comprises:
automatically fetching a plurality of document object model (DOM) structures corresponding to the plurality of webpages; and
searching for the keyword in the plurality of webpages by analyzing each of the plurality of DOM structures.

4. A system (400) for content searching, comprising:
a memory (404) for storing parameters and instructions (424);
a display (410); and
a processor (402) configured to control the display to display a web browser window (500,600,700,800) including a URL field (528,606,706,806) and one or more tabs corresponding to currently active webpages,
wherein the processor, upon executing said instructions, is configured to:
register a plurality of webpages consisting of the currently active webpages and at least one webpage obtained from a history section comprising historically browsed but currently inactive webpages;
receive a keyword for content searching;
search for the keyword in each of the plurality of webpages;
filter the plurality of webpages based on the search to distinguish webpages containing the keyword from the remaining webpages;
if one or more of the at least one webpage obtained from the history section is filtered as comprising the keyword, render each of the filtered one or more of the at least one webpage obtained from the history section in a new tab within the web browser window; and
control the display to highlight, in the web browser window, the tabs (518,618,726,820) corresponding to the filtered webpages comprising the keyword..

5. The system as claimed in claim 4, wherein the processor, upon executing said instructions, is further configured to:
seek permission from the user to open at least one filtered previously visited webpage in a new tab.

## Patentansprüche

1. Verfahren zur Inhaltsdurchsuche in einem Webbrowserfenster (500, 600, 700, 800), wobei das Webbrowserfenster ein URL-Feld (528, 606, 706, 806) und eine oder mehrere Registerkarten, die aktuell aktiven Webseiten entsprechen, enthält, wobei das Verfahren umfasst:
ein Registrieren einer Vielzahl von Webseiten, die aus den aktuell aktiven Webseiten und mindestens einer Webseite bestehen, die von einem Verlaufsabschnitt erhalten wurde, der historisch gebrowste, aber aktuell inaktive Webseiten umfasst;
ein Empfangen eines Stichworts zur Inhaltsdurchsuche;
ein Durchsuchen jeder der Vielzahl von Webseiten nach dem Stichwort;
ein Filtern der Vielzahl von Webseiten, basierend auf der Suche, um das Stichwort enthaltende Webseiten von den übrigen Webseiten zu unterscheiden;
wenn eine oder mehrere der mindestens einen aus dem Verlaufsabschnitt erhaltene Webseiten als das Stichwort umfassend gefiltert wird, ein Rendern jeder der gefilterten einen oder mehreren der mindestens einen Webseite, die von dem Verlaufsabschnitt erhalten wurde, in einer neuen jeweiligen Registerkarte im Webbrowserfenster; und
ein Hervorheben, im Webbrowserfenster, der Registerkarten (518, 618, 726, 820) entsprechend den gefilterten Webseiten, die das Stichwort umfassen.

2. Verfahren nach Anspruch 1, ferner umfassend:
ein Anfordern einer Erlaubnis vom Nutzer, um mindestens eine gefilterte zuvor besuchte Webseite in einer neuen Registerkarte zu öffnen.

3. Verfahren nach Anspruch 1, wobei jede der Vielzahl von Webseiten eine entsprechende Dokumentobjektmodell-(DOM)-Struktur aufweisen, wobei das Durchsuchen umfasst:
ein automatisches Abrufen einer Vielzahl von Dokumentobjektmodell-(DOM)-Strukturen entsprechend der Vielzahl von Webseiten; und
ein Durchsuchen der Vielzahl von Webseiten nach dem Stichwort durch Analysieren jeder der Vielzahl von DOM-Strukturen.

4. System (400) zur Inhaltsdurchsuche, umfassend:
einen Speicher (404) zum Speichern von Parametern und Anweisungen (424);
eine Anzeige (410); und
einen Prozessor (402), der konfiguriert ist, um die Anzeige zu steuern, um ein Webbrowserfenster (500, 600, 700, 800) anzuzeigen, das ein URL-Feld (528, 606, 706, 806) und aktuell aktiven Webseiten entsprechende eine oder mehrere Registerkarte enthält, wobei der Prozessor, bei Ausführung der Anweisungen konfiguriert ist, um:
eine Vielzahl von Webseiten, die aus den aktuell aktiven Webseiten und mindestens einer Webseite bestehen, die von einem Verlaufsabschnitt erhalten wurde, die historisch gebrowste, aber aktuell inaktive Webseiten sind, zu registrieren;
ein Stichwort für die Inhaltsdurchsuche zu empfangen;
jede der Vielzahl von Webseiten nach dem Stichwort zu durchsuchen;
die Vielzahl von Webseiten, basierend auf der Suche, zu filtern, um das Stichwort enthaltende Webseiten von den übrigen Webseiten zu unterscheiden;
wenn eine oder mehrere der mindestens einen aus dem Verlaufsabschnitt erhaltene Webseiten als das Stichwort umfassend gefiltert wird, jede der gefilterten einen oder mehreren der mindestens einen Webseite, die von dem Verlaufsabschnitt erhalten wurde, in einer neuen jeweiligen Registerkarte im Webbrowserfenster zu rendern;
und die Anzeige zu steuern, um im Webbrowserfenster, die Registerkarten (518, 618, 726, 820) entsprechend den gefilterten Webseiten, umfassend das Stichwort, hervorzuheben.

5. System nach Anspruch 4, wobei der Prozessor bei Ausführen der Anweisungen ferner konfiguriert ist, um:
Erlaubnis vom Nutzer anzufordern, um mindestens eine gefilterte zuvor besuchte Webseite in einer neuen Registerkarte zu öffnen.

## Revendications

1. Procédé de recherche de contenu dans une fenêtre de navigateur web (500, 600, 700, 800), la fenêtre de navigateur Web comprenant un champ URL (528, 606, 706, 806) et un ou plusieurs onglets correspondant à des pages web actuellement actives, ledit procédé comprenant :
l'enregistrement d'une pluralité de pages web constituées des pages web actuellement actives et d'au moins une page web obtenue à partir d'une section historique comprenant des pages web historiquement parcourues mais actuellement inactives ;
la réception d'un mot-clé en vue de la recherche de contenu ; la recherche du mot-clé dans chacune de la pluralité de pages web ;
le filtrage de la pluralité de pages web sur la base de la recherche pour distinguer les pages web contenant le mot-clé à partir des pages web restantes ;
si une ou plusieurs de la au moins une page web obtenue à partir de la section historique est filtrée en tant que page comprenant le mot-clé, le rendu de chacune de la ou des pages web de la au moins une page web obtenue à partir de la section historique dans un nouvel onglet respectif dans la fenêtre de navigateur web ; et
la mise en évidence, dans la fenêtre de navigateur Web, des onglets (518, 618, 726, 820) correspondant aux pages web filtrées comprenant le mot-clé.

2. Procédé selon la revendication 1, comprenant en outre :
la demande à l'utilisateur de la permission d'ouvrir au moins une page web filtrée précédemment visitée dans un nouvel onglet.

3. Procédé selon la revendication 1, chacune de la pluralité de pages web possédant une structure de modèle d'objet de document (DOM) correspondante, ladite recherche comprenant :
la récupération automatique d'une pluralité de structures de modèle d'objet de document (DOM) correspondant à la pluralité de pages web ; et
la recherche du mot clé dans la pluralité de pages web en analysant chacune de la pluralité de structures DOM.

4. Système (400) de recherche de contenu, comprenant :
une mémoire (404) destinée à stocker des paramètres et des instructions (424) ;
un dispositif d'affichage (410) ; et
un processeur (402) configuré pour commander le dispositif d'affichage pour afficher une fenêtre de navigateur web (500, 600, 700, 800) comprenant un champ URL (528, 606, 706, 806) et un ou plusieurs onglets correspondant à des pages web actuellement actives, ledit processeur, lors de l'exécution desdites instructions, étant configuré pour :
enregistrer une pluralité de pages web constituées des pages web actuellement actives et d'au moins une page web obtenue à partir d'une section historique comprenant des pages web historiquement parcourues mais actuellement inactives ;
recevoir un mot-clé pour la recherche de contenu ;
rechercher le mot-clé dans chacune de la pluralité de pages web ;
filtrer la pluralité de pages web sur la base de la recherche pour distinguer les pages web contenant le mot-clé des pages web restantes ;
si une ou plusieurs de la au moins une page web obtenues à partir de la section historique sont filtrées en tant que pages comprenant le mot-clé, rendre chacune de la ou des pages web filtrées de la au moins une page Web obtenues à partir de la section historique dans un nouvel onglet dans la fenêtre du navigateur web ;
et commander le dispositif d'affichage pour mettre en évidence, dans la fenêtre de navigateur web, les onglets (518, 618, 726, 820) correspondant aux pages web filtrées comprenant le mot-clé.

5. Système selon la revendication 4, ledit processeur, lors de l'exécution desdites instructions, étant en outre configuré pour :
demander à l'utilisateur la permission d'ouvrir au moins une page web filtrée précédemment visitée dans un nouvel onglet.
